# EUROPEAN PATENT SPECIFICATION

(11) **EP 1 333 360 B1**
(45) Date of publication and mention of the grant of the patent: **31.10.2007**
(21) Application number: 03250330.2
(22) Date of filing: 18.01.2003
(51) Int. Cl.: G06F 1/26, G06F 1/32

(54) **Electrical apparatus and operation of peripheral devices therewith**
Elektrisches Gerät und entsprechender Betrieb von Peripheriegeräten
Appareil électrique et opération correspondant des dispositifs périphériques

(30) Priority: 23.01.2002 GB 0201467
(43) Date of publication of application: 06.08.2003
(73) Proprietor: Pace Micro Technology PLC, Shipley, West Yorkshire BD18 3LF (GB)
(72) Inventor: South, Andrew, Leeds LS17 6NF (GB)
(74) Representative: Wood, Graham

(56) References cited:
- US-A- 5 796 965

## Description

The invention which is the subject of this application relates to electrical apparatus and the operation of peripheral devices therewith, and particularly, but not necessarily exclusively, to electrical apparatus in the form of broadcast data receivers with devices known as Universal Serial Bus (USB) peripheral devices which can be selectively connected with the apparatus.

USB devices can take a number of different forms, and can include devices such as printers, scanners, keyboards, digital cameras and/or the like. These USB devices can be selectively connected to the electrical apparatus via a communication port on the apparatus. Conventionally, power for a USB device must be supplied through the communication port of the apparatus for the device to be operable.

In order for the apparatus to detect the presence of a USB device, power must first be supplied to the device to enable it to communicate with the apparatus and indicate its presence. This means that power must be supplied to the communication port of the apparatus all the time, even in the absence of a USB device, such that if a USB device is connected, the power supply is immediately available. However, when the USB device is first attached to the apparatus, with the apparatus communication port power supply present, large inrush currents into the USB device can occur initially. This can generate glitches or faults on the apparatus power supply rails which, in turn, can adversely affect other parts of the apparatus operation.

Current attempts at solutions to the abovementioned problem use large value electrolytic capacitors positioned on the apparatus communication port power rails to attempt to smooth out these surges. However the capacitors are large and relatively expensive, thereby adding to the cost of the apparatus which, typically, is at a premium.

The aim of the present invention is to provide a means of allowing electrical apparatus to determine the presence of a USB device at a communication port thereof without the need to provide a continuous power supply to the communication port.

In a first aspect of the invention there is provided electrical apparatus, said electrical apparatus provided with at least one communication port for the selective connection of a USB device thereto, said apparatus provided with a power supply to provide power to the USB device through the communication port when the USB device is connected with the port, and characterised in that detection means are provided in the apparatus for detecting when a USB device is connected to the communication port and, on detection of a USB device connection, the power supply to the communication port, which is normally switched off, is switched on.

Preferably the detection means includes a power supply circuit provided in the apparatus with at least one resistor which is monitored, such that a detected change in condition of the resistor indicates the attachment of the USB device to the communication port, whereupon the power supply to the USB device is commenced.

Preferably the at least one resistor that is monitored in the power supply circuit is a pull- up resistor.

Preferably the resistor is connected to the positive supply rail of the communication port power supply.

Further preferably the positive power supply rail is connected to an input of an apparatus control system which monitors the condition of the resistor. In this manner it becomes possible to determine when the USB device is connected to the communication port without being required to provide a continuously switched on power supply. The power supply to the communication port is therefore required to be switched on only when the presence of the USB device is detected.

By being able to switch on the power supply once the USB device is connected to the communication port of the apparatus, a USB power switch can be used to soft start the USB device. This prevents or at least minimises the occurrence of the glitches or faults which occur in the conventional continuous power supply system.

Use of the term "soft start" refers to the method of switching power to the device. If the power is applied instantaneously to a device then a large inrush current can occur due to the internal capacitance of the device. This can be prevented if power is applied more gradually using a soft start circuit. USB power switches implement this by turning the output FET (field effect transistor) on slowly using a charge pump circuit.

Preferably the input of the apparatus control system or the power detect input detects the current from the resistor. When the current is detected as being high from the resistor, no USB device is connected to the communication port and when the current is detected as being low from the resistor, a USB device is connected to the communication port.

Preferably the electrical apparatus is a broadcast data receiver.

According to a yet further aspect of the present invention there is provided a method of connecting a USB device to electrical apparatus, said electrical apparatus provided with at least one communication port for the selective connection of USB device thereto, said apparatus provided with a power supply to provide power to the USB device through the communication port when the USB device is connected with the port, said method comprising the steps of connecting the USB device to the communication port, detecting when the USB device is connected to the communication port using detection means and, on detection of the USB device connection, switching on the power supply to the communication port.

Preferably the change of condition of at least one resistor in a power supply circuit of the power supply is monitored.

Preferably the at least one resistor which is monitored is a pull-up resistor.

Thus, the present invention provides a method and apparatus for reducing inrush current to USB peripheral devices without using high value electrolytic capacitors. The invention has the advantage that it allows the presence of a USB device at a communication port of electrical apparatus to be determined by the apparatus without the need to provide a continuous power supply to the communication port.

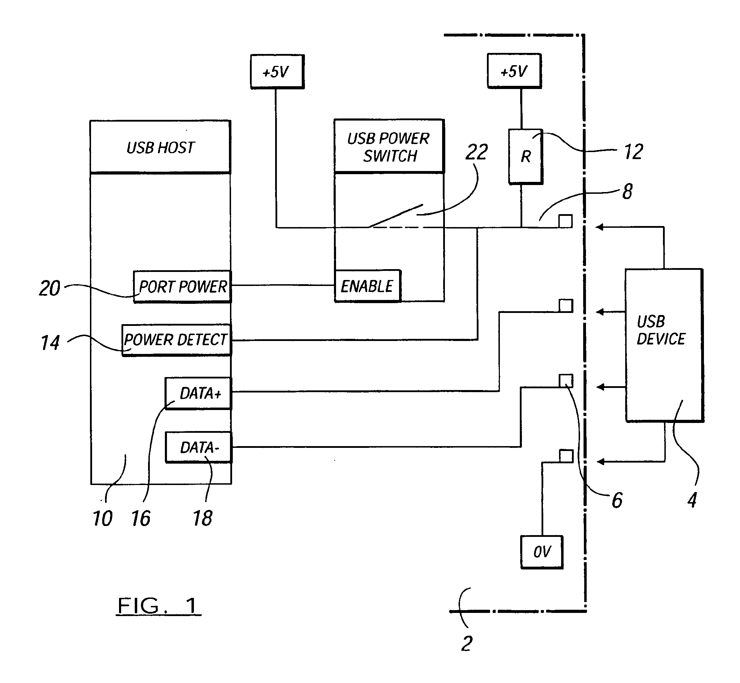

A specific embodiment of the system is now described with reference to the accompanying diagram, wherein:-
Figure 1 illustrates one embodiment of a circuit diagram of a communication port and power supply of the apparatus for connection of a USB device thereto.

In the figure there is illustrated the apparatus, such as a broadcast data receiver 2 and a USB device 4.

A broadcast data receiver (BDR) typically receives digital data from a broadcaster at a remote location and processes and decodes said data to provide video, audio and/or auxiliary data for display on a television screen or for listening via speakers forming a part of the BDR or connected thereto.

In the BDR 2 there is provided a communication port 6 for connection of USB device 4 thereto. A power supply 8 and apparatus control system 10 for controlling the USB device are also provided.

In accordance with the embodiment, a resistor 12 is positioned in the apparatus as shown, such that it is connected to the positive supply rail of the USB communication port and to a power detect input 14 of the host or apparatus control system 10. For example, a 100k resistor can be connected between the positive USB communication port power rail and +5V and to the control system.

The apparatus control system 10 also includes conventional data input and output connections 16, 18 and a power supply connection 20 to a USB Power switch 22, which, when enabled by the apparatus power supply connection 20, switches the power supply on to the port 8.

In accordance with the invention, the port power supply 8 is normally switched off and the power detect input 14 in the control system 10 detects that the current from the resistor 12 is high. This indicates that no USB devices are deemed to be connected to the port 6.

Upon connection of the USB device 4 to the communication port 6, the condition of resistor 12 changes and the power detect input 14 detects that the current from the resistor is now low. This results in a change in condition of the power detect input 14. The port power supply 8 is still switched off. The control system 10 determines that a USB device must have been connected to the communication port 6 to have caused the change in condition of the power detect input 14. The change in condition indicates that the port power supply 8 should be switched on to the device. Thus a signal is emitted from the power output 20 to enable the USB power switch 22 to supply power to the communication port in a controlled, soft start manner.

If the USB device is subsequently removed from the port the apparatus control system (host controller) detects its removal by the absence of USB communications thereto via inlet and outlet 16, 18 over a predetermined period of time and the control system then selects to disable the port power supply 8 via switch 22.

Thus, in accordance with the invention, there is provided in the apparatus, reduced component cost and increase space as high value electrolytic capacitors are no longer required to smooth inrush currents, and the problem associated therewith are removed. The problems can vary but may include, for example, video lock occurring when a USB device is first connected to the broadcast data receiver.

Thus, rather than adapt the conventional solution of fitting a relatively expensive and large value electrolytic capacitor across the USB port power rails; the present invention does not require the same capacitor value to be used and can instead use a capacitor of minimum value required by the USB device specification, thereby reducing size and cost significantly.

While the operation of USB devices and communication ports is controlled by a standard International specification there is nothing in the specification for implementation to prevent this invention being adopted and so the present invention represents a practical and efficient solution to the problem.

## Claims

1. Electrical apparatus, said electrical apparatus provided with at least one communication port (6) for the selective connection of a USB device (4) thereto, said apparatus provided with a power supply (8) to provide power to the USB device (4) through the communication port (6) when the USB device (4) is connected with the port (6), and **characterised in that** detection means are provided in the apparatus for detecting when a USB device (4) is connected to the communication port (6) and, on detection of a USB device connection, the power supply (8) to the communication port (6), which is normally switched off, is switched on.

2. Electrical apparatus according to claim 1 **characterised in that** the detection means includes a power supply circuit with at least one resistor (12) which is monitored, such that a detected change in condition of the resistor (12) indicates the connection of the USB device (4) to the communication port (6), whereupon the power supply to the USB device (4) is switched on.

3. Electrical apparatus according to claim 2 **characterised in that** the at least one resistor (12) is a pull-up resistor.

4. Electrical apparatus according to claim 2 **characterised in that** the at least one resistor (12) is connected to a positive supply rail of the communication port power supply (8).

5. Electrical apparatus according to claim 4 **characterised in** the positive supply rail is connected to an input (14) of an apparatus control system (10) which monitors the condition of the resistor (12).

6. Electrical apparatus according to claim 2 **characterised in that** when the current from the resistor (12) is detected as being high, this indicates that no USB device (4) is connected to the communication port (6).

7. Electrical apparatus according to claim 2 **characterised in that** when the current from the resistor (12) is detected as being low, this indicates that a USB device (4) is connected to the communication port (6).

8. Electrical apparatus according to claim 1 **characterised in that** on detection of a USB device connection, a USB power switch (22) in the apparatus can be used to supply power to the USB device (4) via the communication port (6).

9. Electrical apparatus according to claim 8 **characterised in that** the USB power switch (22) soft starts the USB device (4).

10. Electrical apparatus according to any of the preceding claims **characterised in that** the input (14) of the apparatus control system (10) changes condition on detection of a change in condition of the resistor (12), thereby activating a power supply connection (20) to the USB power switch (22) which, when enabled by the apparatus power supply connection (20), switches the power supply (8) on to the communication port (6) of the apparatus.

11. Electrical apparatus according to any preceding claim **characterised in that** the apparatus control system (10) further includes data input and output connections (16, 18) for communication with the USB device (4).

12. Electrical apparatus according to claim 11 **characterised in that** when a USB device (4) is disconnected from the communication port (6), lack of communication from data input and/or output connections (16, 18) over a pre-determined period of time is detected, whereupon the communication port power supply (8) is disabled.

13. Electrical apparatus according to claim 1 **characterised in that** the apparatus is a broadcast data receiver (2).

14. A method of connecting a USB device (4) to electrical apparatus, said electrical apparatus provided with at least one communication port (6) for the selective connection of USB device (4) thereto, said apparatus provided with a power supply (8) to provide power to the USB device (4) through the communication port (6) when the USB device is connected with the port, said method comprising the steps of connecting the USB device (4) to the communication port (6), detecting when the USB device (4) is connected to the communication port (6) using detection means and, on detection of the USB device connection, switching on the power supply (8) to the communication port (6).

15. A method according to claim 14 **characterised in that** the change of condition of at least one resistor (12) in a power supply circuit of the power supply (8) is detected.

## Patentansprüche

1. Elektrische Vorrichtung, die mit wenigstens einem Kommunikationsport (6) für einen selektiven Anschluss eines USB-Gerätes (4) daran versehen ist, wobei die genannte Vorrichtung mit einer Stromversorgung (8) zum Zuführen von Strom zu dem USB-Gerät (4) durch den Kommunikationsport (6) ausgestattet ist, wenn das USB-Gerät (4) an dem Port (6) angeschlossen ist, und **dadurch gekennzeichnet, dass** Erfassungsmittel in der Vorrichtung vorgesehen sind, um zu erfassen, wenn ein USB-Gerät (4) am Kommunikationsport (6) angeschlossen ist, und nach dem Erfassen eines USB-Geräteanschlusses die Stromversorgung (8) zu dem normalerweise abgeschalteten Kommunikationsport (6) eingeschaltet wird.

2. Elektrische Vorrichtung nach Anspruch 1, **dadurch gekennzeichnet, dass** das Erfassungsmittel eine Stromversorgungsschaltung mit wenigstens einem Widerstand (12) aufweist, der überwacht wird, so dass eine erfasste Zustandsänderung des Widerstands (12) den Anschluss des USB-Gerätes (4) am Kommunikationsport (6) anzeigt, wonach die Stromversorgung zum USB-Gerät (4) eingeschaltet wird.

3. Elektrische Vorrichtung nach Anspruch 2, **dadurch gekennzeichnet, dass** der wenigstens eine Widerstand (12) ein Pull-up-Widerstand ist.

4. Elektrische Vorrichtung nach Anspruch 2, **dadurch gekennzeichnet, dass** der wenigstens eine Widerstand (12) an eine positive Versorgungsschiene der Stromversorgung (8) des Kommunikationsports angeschlossen ist.

5. Elektrische Vorrichtung nach Anspruch 4, **dadurch gekennzeichnet, dass** die positive Versorgungsschiene an einen Eingang (14) eines Steuersystems (10) der Vorrichtung angeschlossen ist, das den Zustand des Widerstands (12) überwacht.

6. Elektrische Vorrichtung nach Anspruch 2, **dadurch gekennzeichnet, dass**, wenn der Strom vom Widerstand (12) als hoch erfasst wird, dies anzeigt, dass kein USB-Gerät (4) am Kommunikationsport (6) angeschlossen ist.

7. Elektrische Vorrichtung nach Anspruch 2, **dadurch gekennzeichnet, dass**, wenn der Strom vom Widerstand (12) als tief erfasst wird, dies anzeigt, dass ein USB-Gerät (4) am Kommunikationsport (6) angeschlossen ist.

8. Elektrische Vorrichtung nach Anspruch 1, **dadurch gekennzeichnet, dass** bei der Erfassung eines USB-Geräteanschlusses ein USB-Stromschalter (22) in der Vorrichtung zum Zuführen von Strom zum USB-Gerät (4) über den Kommunikationsport (6) benutzt werden kann.

9. Elektrische Vorrichtung nach Anspruch 8, **dadurch gekennzeichnet, dass** der USB-Stromschalter (22) das USB-Gerät (4) softstartet.

10. Elektrische Vorrichtung nach einem der vorherigen Ansprüche, **dadurch gekennzeichnet, dass** der Eingang (14) des Steuersystems (10) der Vorrichtung den Zustand nach der Erfassung eines Zustandsänderung des Widerstands (12) ändert, wodurch ein Stromversorgungsanschluss (20) zum USB-Stromschalter (22) aktiviert wird, der, wenn er durch den Stromversorgungsanschluss (20) der Vorrichtung aktiviert wird, die Stromversorgung (8) zum Kommunikationsport (6) der Vorrichtung einschaltet.

11. Elektrische Vorrichtung nach einem der vorherigen Ansprüche, **dadurch gekennzeichnet, dass** das Steuersystem (10) der Vorrichtung ferner Datenein- und - ausgangsanschlüsse (16, 18) für die Kommunikation mit dem USB-Gerät (4) beinhaltet.

12. Elektrische Vorrichtung nach Anspruch 11, **dadurch gekennzeichnet, dass**, wenn ein USB-Gerät (4) vom Kommunikationsport (6) abgetrennt wird, das Fehlen von Kommunikationen von Datenein- und/oder -ausgangsanschlüssen (16, 18) über eine vorbestimmte Zeitperiode erfasst wird, wonach die Stromversorgung (8) des Kommunikationsports gesperrt wird.

13. Elektrische Vorrichtung nach Anspruch 1, **dadurch gekennzeichnet, dass** die Vorrichtung ein Rundfunkdatenempfänger (2) ist.

14. Verfahren zum Anschließen eines USB-Gerätes (4) an eine elektrische Vorrichtung, wobei die genannte elektrische Vorrichtung mit wenigstens einem Kommunikationsport (6) zum selektiven Anschließen eines USB-Gerätes (4) daran ausgestattet ist, wobei die genannte Vorrichtung mit einer Stromversorgung (8) zum Zuführen von Strom zu dem USB-Gerät (4) durch den Kommunikationsport (6) versehen ist, wenn das USB-Gerät an den Port angeschlossen ist, wobei das genannte Verfahren die folgenden Schritte beinhaltet: Anschließen des USB-Gerätes (4) am Kommunikationsport (6), Erfassen mit einem Erfassungsmittel, wenn das USB-Gerät (4) am Kommunikationsport (6) angeschlossen ist, und nach dem Erfassen des USB-Geräteanschlusses Einschalten der Stromversorgung (8) zum Kommunikationsport (6).

15. Verfahren nach Anspruch 14, **dadurch gekennzeichnet, dass** die Zustandsänderung von wenigstens einem Widerstand (12) in einer Stromversorgungsschaltung der Stromversorgung (8) erfasst wird.

## Revendications

1. Appareil électrique, ledit appareil électrique étant doté d'au moins un port de communication (6) pour permettre la connexion sélective d'un dispositif USB (4) sur celui-ci, ledit appareil étant pourvu d'une alimentation d'énergie (8) afin de fournir l'alimentation au dispositif USB (4) par l'intermédiaire du port de communication (6) lorsque le dispositif USB (4) est connecté au port (6), et **caractérisé en ce que** des moyens de détection sont montés dans l'appareil pour détecter le moment auquel un dispositif USB (4) est connecté au port de communication (6) et, lors de la détection de la connexion d'un dispositif USB, l'alimentation d'énergie (8) se rendant au port de communication (6), qui est normalement hors circuit, sera alors mise en circuit.

2. Appareil électrique, selon la revendication 1, **caractérisé en ce que** les moyens de détection comportent un circuit d'alimentation d'énergie, avec au moins une résistance (12) qui fait l'objet d'une surveillance, de sorte qu'un changement détecté dans l'état de la résistance (12) va indiquer la connexion du dispositif USB (4) au port de communication (6), après quoi l'alimentation d'énergie se rendant au dispositif USB (4) est mise en circuit.

3. Appareil électrique, selon la revendication 2, **caractérisé en ce que** ladite au moins une résistance (12) est une résistance d'excursion haute.

4. Appareil électrique, selon la revendication 2, **caractérisé en ce que** ladite au moins une résistance (12) est connectée à une rampe d'énergie positive de l'alimentation d'énergie (8) du port de communication.

5. Appareil électrique, selon la revendication 4, **caractérisé en ce que** la rampe d'énergie positive est connectée à une entrée (14) d'un système de commande d'appareil (10) lequel surveille l'état de la résistance (12).

6. Appareil électrique, selon la revendication 2, **caractérisé en ce que** lorsque le courant provenant de la résistance (12) est détecté comme étant à un niveau élevé, ceci indique qu'aucun dispositif USB (4) n'est connecté au port de communication (6).

7. Appareil électrique, selon la revendication 2, **caractérisé en ce que** lorsque le courant provenant de la résistance (12) est détecté comme étant à un niveau faible, ceci indique qu'un dispositif USB (4) est effectivement connecté au port de communication (6).

8. Appareil électrique, selon la revendication 1, **caractérisé en ce que** lors de la détection d'une connexion de dispositif USB, un interrupteur d'énergie USB (22) monté dans l'appareil peut être utilisé pour fournir une alimentation d'énergie au dispositif USB (4) par l'intermédiaire du port de communication (6).

9. Appareil électrique, selon la revendication 8, **caractérisé en ce que** l'interrupteur d'énergie USB (22) fait démarrer progressivement le dispositif USB (4).

10. Appareil électrique, selon l'une quelconque des revendications précédentes, **caractérisé en ce que** l'entrée (14) du système de commande de l'appareil (10) change d'état lors de la détection d'un changement dans l'état de la résistance (12), ce qui active une connexion d'alimentation d'énergie (20) se rendant à l'interrupteur d'énergie USB (22) lequel, après avoir été activé par la connexion d'alimentation d'énergie (20) de l'appareil, va mettre en circuit l'énergie électrique (8) sur le port de communication (6) de l'appareil.

11. Appareil électrique, selon l'une quelconque des revendications précédentes, **caractérisé en ce que** le système de commande de l'appareil (10) inclut en outre des connexions d'entrée et de sortie de données (16, 18) en vue d'une communication avec le dispositif USB (4).

12. Appareil électrique, selon la revendication 11, **caractérisé en ce que** lorsqu'un dispositif USB (4) est déconnecté du port de communication (6), l'absence de communication provenant des connexions d'entrée et/ou de sortie de données (16, 18) pendant un intervalle de temps prédéterminé sera détecté, après quoi l'énergie électrique (8) du port de communication sera désactivée.

13. Appareil électrique, selon la revendication 1, **caractérisé en ce que** l'appareil est un récepteur de données diffusées (2).

14. Procédé servant à connecter un dispositif USB (4) à un appareil électrique, ledit appareil électrique étant doté d'au moins un port de communication (6) pour la connexion sélective d'un dispositif USB (4) sur celui-ci, ledit appareil étant pourvu d'une alimentation d'énergie (8) afin de fournir l'alimentation au dispositif USB (4) par l'intermédiaire du port de communication (6) lorsque le dispositif USB est connecté au port, ledit procédé comprenant les étapes consistant à connecter le dispositif USB (4) sur le port de communication (6) ; grâce aux moyens de détection, à détecter le moment auquel le dispositif USB (4) est connecté au port de communication (6) ; et, lors de la détection de la connexion du dispositif USB, à mettre en circuit l'alimentation d'énergie (8) se rendant au port de communication (6).

15. Procédé, selon la revendication 14, **caractérisé en ce que** le changement d'état de ladite au moins une résistance (12) dans un circuit d'énergie électrique de l'alimentation d'énergie (8) fait l'objet d'une détection.
